(19) Europäisches Patentamt
European Patent Office
Office européen des brevets

(11) **EP 4 730 697 A1**

(12) **EUROPEAN PATENT APPLICATION**

(43) Date of publication:
22.04.2026 Bulletin 2026/17

(21) Application number: 25208961.0

(22) Date of filing: 15.10.2025

(51) International Patent Classification (IPC):
**H04L 9/08** (2006.01)

(52) Cooperative Patent Classification (CPC):
**H04L 9/085;** H04L 2209/46

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 15.10.2024 US 202418915892

(71) Applicants:
• **Beijing Zitiao Network Technology Co., Ltd.**
**Beijing 100190 (CN)**
• **Lemon Inc.**
**Grand Cayman, KY1-1205 (KY)**

(72) Inventors:
• **NIU, Yongchuan**
**Beijing, 100028 (CN)**

• **LU, Donghang**
**Culver City, 90230 (US)**
• **DAI, Wei**
**Culver City, 90230 (US)**
• **QIAN, Haohao**
**Beijing, 100028 (CN)**
• **YIN, Dong**
**Beijing, 100028 (CN)**
• **ZHAO, Yongjun**
**Beijing, 100028 (CN)**
• **WANG, Li**
**Beijing, 100028 (CN)**
• **YAN, Qiang**
**Beijing, 100028 (CN)**

(74) Representative: **Marks & Clerk LLP**
**15 Fetter Lane**
**London EC4A 1BW (GB)**

(54) **SECURE MULTI-PARTY COMPARISON**

(57) The present disclosure involves methods, apparatus, and systems for processing comparison in secure multiparty computation (MPC). One example method includes, partitioning, by a first party, a first difference (x) between a share of value $a$ and a share of value $b$ into N sections. For each section, the first party generates a first share of a first indicator indicating whether the section is smaller than a corresponding section of a second difference (y) between a second share of $b$ and a second share of $a$; sends, based on oblivious transfer (OT) protocol, a second share of the first indicator to the second party; generates, based on a second indicator, a first share of a third indicator indicating whether the section is a most significant section that is not equal to the corresponding section of y. The method includes determining whether $a<b$ based on the first indicator and the third indicator.

100

| | | Party 0 (P0) | Party 1 (P1) |
|---|---|---|---|
| 102 | Partition input $x$ and $y$ into a number of sections | $x = 1101110000110110$ $= x_0||x_1||x_2||x_3$ $= 1101||1100||0011||0110$ | $y = 1101110100110110$ $= y_0||y_1||y_2||y_3$ $= 1101||1101||0011||0110$ |
| 104 | For each section $x_j$, invoke oblivious transfer (OT) protocol | (1) Generate a first random bit $\langle lt_j \rangle_0^B \leftarrow \{0,1\}$, and generate a first group of 16 bits $s_{j,k} = (\langle lt_j \rangle_0^B \oplus 1\{x_j < k\}) \bmod 2, k = 0,1,...,15$ (2) Generate a second random integer $\langle eq_j \rangle_0^A \leftarrow \{0,1,...,q\}$, and generate a second group of 16 integers $t_{j,k} = (1\{x_j \neq k\} - \langle eq_j \rangle_0^A) \bmod (q+1), k = 0,1,...,15$ | (1) Obtain $\langle lt_j \rangle_1^B = s_{j,y_j}$ $= (\langle lt_j \rangle_0^B \oplus 1\{x_j < k\}) \bmod 2$ (2) Obtain $\langle eq_j \rangle_1^A = t_{j,y_j}$ $= (1\{x_j \neq y_j\} - \langle eq_j \rangle_0^A) \bmod (q+1)$ |
| 106 | Output secret shares of $lt_j$ and $eq_j$ | (1) Output $\langle lt_0 \rangle_0^B||\langle lt_1 \rangle_0^B||\langle lt_2 \rangle_0^B||\langle lt_3 \rangle_0^B$ (e.g.,0110) (2) Output $\langle eq_0 \rangle_0^A||\langle eq_1 \rangle_0^A||\langle eq_2 \rangle_0^A||\langle eq_3 \rangle_0^A$ (e.g., 3234) | (1) Output $\langle lt_0 \rangle_1^B||\langle lt_1 \rangle_1^B||\langle lt_2 \rangle_1^B||\langle lt_3 \rangle_1^B$ (e.g.,0010) (2) Output $\langle eq_0 \rangle_1^A||\langle eq_1 \rangle_1^A||\langle eq_2 \rangle_1^A||\langle eq_3 \rangle_1^A$ (e.g., 2421) |
| 108 | Identify the first section that are not equal | For each $\langle eq_j \rangle_0^A$, compute $\langle s_j \rangle_0^A = (\sum_{k=0}^{j} \langle eq_k \rangle_0^A - 2 \cdot \langle eq_j \rangle_0^A + 1) \bmod (q+1)$ Output $\langle s_0 \rangle_0^A||\langle s_1 \rangle_0^A||\langle s_2 \rangle_0^A||\langle s_3 \rangle_0^A$ (e.g., 3230) | For each $\langle eq_j \rangle_1^A$, compute $\langle s_j \rangle_1^A = (\sum_{k=0}^{j} \langle eq_k \rangle_1^A - 2 \cdot \langle eq_j \rangle_1^A) \bmod (q+1)$ Output $\langle s_0 \rangle_1^A||\langle s_1 \rangle_1^A||\langle s_2 \rangle_1^A||\langle s_3 \rangle_1^A$ (e.g., 3342) |

FIG. 1A

EP 4 730 697 A1

100

110

112

114

116

118

120

| | Party 0 (P0) | Party 1 (P1) |
|---|---|---|
| For each section $\langle s_j \rangle_0^A$, invoke OT protocol | Generate a third random bit $\langle g_j \rangle_0^B \leftarrow \{0,1\}$, and generate a third group of 5 bits $t_{j,k} = \langle g_j \rangle_0^B \oplus \left(\mathbf{1}\left\{\langle s_j \rangle_0^A = k\right\} AND \langle lt_j \rangle_0^B\right), k = 0,1,\dots,4$ | Obtain $\langle g_j \rangle_1^B$ $= t_{j,z}$ $= \langle g_j \rangle_0^B \oplus \left(\mathbf{1}\left\{\langle s_j \rangle_0^A = Z\right\} AND \langle lt_j \rangle_0^B\right),$ where $Z = \left[-\langle s_j \rangle_1^A\right] \bmod (q+1)$ |
| Output secret shares of $g_j$ | Output $\langle g_0 \rangle_0^B \| \langle g_1 \rangle_0^B \| \langle g_2 \rangle_0^B \| \langle g_3 \rangle_0^B$ (e.g., 0110) | Output $\langle g_0 \rangle_1^B \| \langle g_1 \rangle_1^B \| \langle g_2 \rangle_1^B \| \langle g_3 \rangle_1^B$ (e.g., 0010) |
| For each section $\langle s_j \rangle_1^A$, invoke OT protocol | Obtain $\langle h_j \rangle_0^B$ $= t_{j,z}$ $= \langle h_j \rangle_1^B \oplus \left(\mathbf{1}\left\{\langle s_j \rangle_1^A = Z\right\} AND \langle lt_j \rangle_1^B\right),$ where $Z = \left[-\langle s_j \rangle_0^A\right] \bmod (q+1)$ | Generate a random bit $\langle h_j \rangle_1^B \leftarrow \{0,1\}$, and generate a fourth group of 5 bits $t_{j,k} = \langle h_j \rangle_1^B \oplus \left(\mathbf{1}\left\{\langle s_j \rangle_1^A = k\right\} AND \langle lt_j \rangle_1^B\right), k = 0,1,\dots,4$ |
| Output secret shares of $h_j$ | Output $\langle h_0 \rangle_0^B \| \langle h_1 \rangle_0^A \| \langle h_2 \rangle_0^A \| \langle h_3 \rangle_0^A$ (e.g.,0110) | Output $\langle h_0 \rangle_1^B \| \langle h_1 \rangle_1^B \| \langle h_2 \rangle_1^B \| \langle h_3 \rangle_1^B$ (e.g., 0110) |
| Output secret share of $\mathbf{1}\{a < b\}$ | $\langle \mathbf{1}\{a < b\} \rangle_0^B = \left(\sum_{j=0}^{j=q-1} \langle g_j \rangle_0^B \oplus \langle h_j \rangle_0^B\right) \bmod 2$ | $\langle \mathbf{1}\{a < b\} \rangle_1^B = \left(\sum_{j=0}^{j=q-1} \langle g_j \rangle_1^B \oplus \langle h_j \rangle_1^B\right) \bmod 2$ |
| Obtain result of comparison | $\langle \mathbf{1}\{a < b\} \rangle_0^B \oplus \langle \mathbf{1}\{a < b\} \rangle_1^B$ | |

FIG. 1B

# EP 4 730 697 A1

**Description**

## TECHNICAL FIELD

The present disclosure generally relates to data processing, and in particular, processing comparison in secure multi-party computation.

## BACKGROUND

Data plays an increasingly important role in modern society, driving advancements across various sectors. Effective collaboration among data custodians can be beneficial to the value of data. On the other hand, data collaboration may be compromised by isolated data silos due to the control of data by different entities, regulatory compliance on data privacy across countries, and frequent privacy breaches, etc.

Secure multi-party computation (MPC) is a technique developed to address some of the issues in data collaborations. MPC allows parties to jointly evaluate or analyze their respective private data without sharing the private data with others. Thus, data privacy of each party is protected. As data volumes increase, the computational and communication complexities of MPC also escalate significantly. Therefore, MPC protocols are also developed for specific use scenarios to meet practical data security and computational needs.

## SUMMARY

The present disclosure relates to data processing, and in particular, processing comparison in secure multi-party computation (MPC). One aspect of the present disclosure provides a computer-implemented method including generating, by a first party of a secure multi-party computation (MPC), a first difference between a first secret share of a first value and a first secret share of a second value; and partitioning the first difference in binary form into N sections, where N is a positive integer. For a $j^{th}$ section ($x_j$) of the first difference, where $j = 0, 1, ... , N$ - 1, the method includes generating a first secret share of a first indicator indicating whether $x_j < y_j$, where $y_j$ is a $j^{th}$ section of N sections of a second difference between a second secret share of the second value and a second secret share of the first value, where the second difference is generated by a second party of the secure MPC; sending, based on oblivious transfer (OT) protocol, a second secret share of the first indicator to the second party; generating a first secret share of a second indicator indicating whether $x_j = y_j$; sending, based on the OT protocol, a second secret share of the second indicator to the second party; and generating, based on the second indicator, a first secret share of a third indicator indicating whether $x_j$ is a most significant section of the N sections where $x_j \neq y_j$. The method further includes determining whether the first value is smaller than the second value based on the first indicator and the third indicator.

In some implementations, the first secret share of the first indicator and the second secret share of the first indicator are Boolean shares; the first secret share of the first indicator and the second secret share of the second indicator are arithmetic shares; and the first secret share of the first indicator and a second secret share of the third indicator are arithmetic shares.

In some implementations, the N sections of the first difference each includes M bits, where M is an integer. Generating the first secret share of the first indicator includes generating a first random bit as the first secret share of the first indicator. The method further includes generating, based on the first random bit, a first group of $2^M$ bits. Sending the second secret share of the first indicator to the second party includes sending a bit selected from the first group of $2^M$ bits as the second secret share of the first indicator to the second party, where the bit is selected based on $y_j$.

In some implementations, the N sections of the first difference each includes M bits. Generating the first secret share of the second indicator includes generating a second random integer between 0 and N as the first secret share of the second indicator. The method further includes generating, based on the second random integer, a second group of $2^M$ integers. Sending the second secret share of the second indicator to the second party includes sending an integer selected from the second group of $2^M$ integers as the second secret share of the second indicator, where the integer is selected based on $y_j$.

In some implementations, generating the first secret share of the third indicator includes computing $\left( \sum_{k=0}^{j} \langle eq_k \rangle_0^A - 2 \cdot \langle eq_j \rangle_0^A + 1 \right) \ mod \ (N + 1)$, where $\langle eq_k \rangle_0^A$ is the first secret share of the second indicator corresponding to a $k^{th}$ section of the N sections.

In some implementations, the method further includes generating, by the second party, a second secret share of the third indicator by computing $\left( \sum_{k=0}^{j} \langle eq_k \rangle_1^A - 2 \cdot \langle eq_j \rangle_1^A \right) \ mod \ (N + 1)$, where $\langle eq_k \rangle_1^A$ is the second secret share of the second indicator corresponding to the $k^{th}$ section.

In some implementations, determining whether the first value is smaller than the second value includes performing an exclusive OR (XOR) operation on the first secret share of the first indicator corresponding to a $R^{th}$ section of the N sections, and the second secret share of the first indicator corresponding to the $R^{th}$ section. The $R^{th}$ section is the most significant section where $x_R \neq y_R$.

In some implementations, the N sections of the first difference each include M bits, where M is an integer. Generating the first secret share of the second indicator includes generating a random bit; generating, based on the random bit, a group of $2^M$ bits, where a bit is selected from the group of $2^M$ bits based on a value of $y_j$; generating a random integer as the first secret share of the second indicator; and generating, based on the random integer, two integers, where an integer is selected, based on the bit selected from the group of $2^M$ bits, from the two integers as the second secret share of the second indicator.

In some implementations, the secure MPC is a secure two-party computation.

Another aspect of the present disclosure provides one or more computer-readable storage media storing one or more instructions that, when executable by one or more computers, cause the one or more computers to perform operations including generating, by a first party of a secure multi-party computation (MPC), a first difference between a first secret share of a first value and a first secret share of a second value; and partitioning the first difference in binary form into N sections, where N is a positive integer. For a $j^{th}$ section ($x_j$) of the first difference, where $j = 0, 1, ... , N - 1$, the operations include generating a first secret share of a first indicator indicating whether $x_j < y_j$, where $y_j$ is a $j^{th}$ section of N sections of a second difference between a second secret share of the second value and a second secret share of the first value, where the second difference is generated by a second party of the secure MPC; sending, based on oblivious transfer (OT) protocol, a second secret share of the first indicator to the second party; generating a first secret share of a second indicator indicating whether $x_j = y_j$; sending, based on the OT protocol, a second secret share of the second indicator to the second party; and generating, based on the second indicator, a first secret share of a third indicator indicating whether $x_j$ is a most significant section of the N sections where $x_j \neq y_j$. The operations further include determining whether the first value is smaller than the second value based on the first indicator and the third indicator.

Another aspect of the present disclosure provides a computer-implemented system including one or more computers and one or more computer memory devices interoperably coupled with the one or more computers. The one or more computer memory devices have computer-readable storage media storing one or more instructions that, when executed by the one or more computers, perform one or more operations including generating, by a first party of a secure multi-party computation (MPC), a first difference between a first secret share of a first value and a first secret share of a second value; and partitioning the first difference in binary form into N sections, where N is a positive integer. For a $j^{th}$ section ($x_j$) of the first difference, where $j = 0,1, ... , N - 1$, the operations include generating a first secret share of a first indicator indicating whether $x_j < y_j$, where $y_j$ is a $j^{th}$ section of N sections of a second difference between a second secret share of the second value and a second secret share of the first value, where the second difference is generated by a second party of the secure MPC; sending, based on oblivious transfer (OT) protocol, a second secret share of the first indicator to the second party; generating a first secret share of a second indicator indicating whether $x_j = y_j$; sending, based on the OT protocol, a second secret share of the second indicator to the second party; and generating, based on the second indicator, a first secret share of a third indicator indicating whether $x_j$ is a most significant section of the N sections where $x_j \neq y_j$. The operations further include determining whether the first value is smaller than the second value based on the first indicator and the third indicator.

While generally described as computer-implemented software embodied on tangible media that processes and transforms the respective data, some or all of the aspects can be computer-implemented methods or further included in respective systems or other devices for performing this described functionality. The details of these and other aspects and implementations of the present disclosure are set forth in the accompanying drawings and the description below. Other features, objects, and advantages of the disclosure will be apparent from the description and drawings, and from the claims.

**BRIEF DESCRIPTION OF DRAWINGS**

FIGS. 1A-1B illustrate an example process of performing comparison in a secure two-party computation (MPC) system.

FIG. 2 illustrates a flow chart of the example method of performing comparison in the secure MPC system as shown in FIGS. 1A-1B.

FIG. 3 illustrates a schematic diagram of an example computing system.

Like reference numbers and designations in the various drawings indicate like elements.

## DETAILED DESCRIPTION

This specification relates to methods, apparatuses, and systems for performing comparison in secure multi-party computation (MPC). Secure comparison is widely used in many secure computation scenarios, such as privacy-preserving machine learning, private set intersection, secure data mining, etc. Secure comparison can calculate whether a first private input is smaller than the second private input, without disclosing the private inputs to any party. In secure MPC, especially in secure two-party computation (2PC), secure comparison remains the bottleneck that affects the performance of the secure MPC.

The present disclosure provides techniques to improve the speed and efficiency of secure comparison in secure MPC. In some implementations, a first party of the secure MPC can generate a first difference between a first secret share of a first private input and a first secret share of a second private input, and partition the first difference in binary form into N sections, where N is a positive integer. A second party of the secure MPC can generate a second difference between a second secret share of the second private input and a second secret share of the first private input, and partition the second difference in binary form into N sections. For a $j^{th}$ section ($x_j$) of the first difference and a corresponding $j^{th}$ section ($y_j$) of the second difference, where $j = 0,1, \dots , N - 1$, the first party can generate a first secret share of a first indicator indicating whether $x_j < y_j$, and send, based on oblivious transfer (OT) protocol, a second secret share of the first indicator to the second party. The first party can further generate a first secret share of a second indicator indicating whether $x_j = y_j$, and send, based on OT protocol, a second secret share of the second indicator to the second party. The first party can generate, based on the second indicator, a first secret share of a third indicator indicating whether $x_j$ is a most significant section of the N sections where $x_j \neq y_j$, and the second party can generate a second secret share of the third indicator. Based on the first indicator and the third indicator, the secure MPC can determine whether the first private input is smaller than the second private input.

The described techniques can achieve one or more technical effects. For example, through multiple invocations of the OT protocol, the secure comparison can be performed with higher speed and efficiency. For another example, the described techniques can balance the volume of data transmission between parties of the secure MPC, and the number of communication rounds between the parties. Further, the described techniques can protect data security against two semi-honest parties. In some implementations, additional or different technical effects can be achieved.

Techniques of the present disclosure can be applied in a variety of practical scenarios. For example, in cryptographic key management, secure MPC can help build an environment for generating, storing, and managing cryptographic keys without the need for a hardware security appliance. For another example, in the healthcare domain, secure MPC can provide a safe solution for encrypting, storing, and transmitting sensitive medical data. For yet another example, in the financial sector, secure MPC can help financial organizations to jointly analyze financial trends without exposing individual customer data.

The above aspects and some other aspects of the present disclosure are discussed in greater detail below.

The table below shows some example notations and their corresponding meaning.

| Example Notations | |
|---|---|
| Notation | Meaning |
| $Z_{2^l}$ | For arithmetic sharing, a value x having *l* bits in length is shared additively in the ring $$Z_{2^l}$$ |
| $Z_2$ | For Boolean sharing, a value x having *l* bits in length is shared additively in the ring $$Z_2$$ |
| $\langle x \rangle^A$ | Arithmetic share of x |
| $\langle x \rangle^B$ | Boolean share of x |
| $\langle x \rangle_i$ | Secret share of x that belongs to party i. |
| $\mathbf{1}\{b\}$ | Indicator function, which equals to 1 when b is true and equals to 0 when b is false. |
| $s \leftarrow S$ | Sampling an element s, uniformly at random from S. |
| $\|$ | concatenation operation |

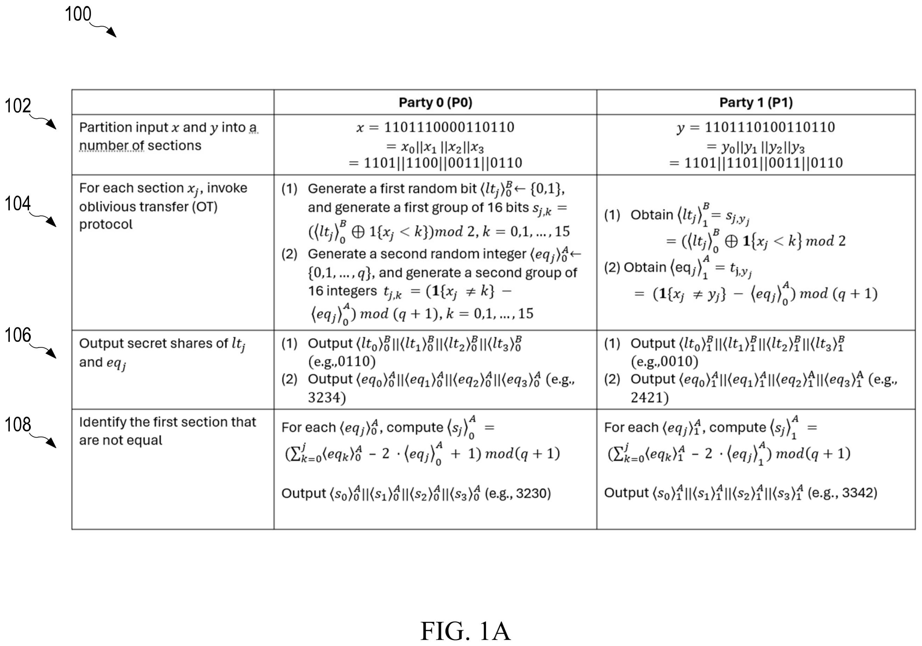

FIG. 1A-1B illustrate an example process 100 of performing comparison in a secure two-party computation (MPC) system. A first party participating in the secure MPC is denoted as Party 0 (P0), and a second party participating in the secure MPC is denoted as Party 1 (P1). The process 100 can be implemented to compare whether a first private input is smaller than a second private input (e.g., whether $a < b$), without disclosing the private inputs to any party.

As starter, the first party P0 has an arithmetic share of the private input $a$ denoted as $\langle a \rangle_0^A$ and an arithmetic share of the input $b$ denoted as $\langle b \rangle_0^A$. The second party P1 has an arithmetic share of the private input $a$ denoted as $\langle a \rangle_1^A$, and an arithmetic share of the input $b$ denoted as $\langle b \rangle_1^A$. The sum of arithmetic shares is the private input, such that $\langle a \rangle_0^A + \langle a \rangle_1^A = a$, and $\langle b \rangle_0^A + \langle b \rangle_1^A = b$. For example, the secure MPC can generate a random integer as $\langle a \rangle_0^A$ and send it to P0, and then generate $a - \langle a \rangle_0^A$ as $\langle a \rangle_1^A$ and send it to P1. As such, the secure MPC system can determine whether $a < b$ by determining whether $\langle a \rangle_0^A - \langle b \rangle_0^A < \langle b \rangle_1^A - \langle a \rangle_1^A$. P0 generates $\langle a \rangle_0^A - \langle b \rangle_0^A$ as its initial input $x$, and P1 generates $\langle b \rangle_1^A - \langle a \rangle_1^A$ as its initial input $y$, where $x$ and $y$ are in binary form.

At 102, P0 partitions its input $x$ into a number of sections $x_j$, such that $x = x_0\|...\|x_{q-1}$. The length of the input $x$ is $l$ bits. $x_0$ is the most significant section, and $x_{q-1}$ is the least significant section. The length of each section is $m$ bits, so that the input $x$ is partitioned into $q = l/m$ sections. As an example, as shown in FIG. 1A, the input of P0 is $x = 1101110100110110$, which is 16 bits in length. P0 can partition $x$ into four sections, each section being 4 bits in length: $x_0 = 1101$, $x_1 = 1100$, $x_2 = 0011$, and $x_3 = 0110$. That is, $l = 16$, $m = 4$, and $q = 4$.

Similarly, P1 partitions its input y into a number of sections $y_j$, such that $y = y_0\|...\|y_{q-1}$. $y_0$ is the most significant section, and $y_{q-1}$ is the least significant section. The length of the input $y$ is $l$ bits. The length of each section is $m$ bits, so that the input is partitioned into $q = l/m$ sections. As an example, as shown in FIG. 1A, P1 inputs $y = 1101110100110110$, which is 16 bits in length. P1 can partition y into four sections, each section being 4 bits in length: $y_0 = 1101$, $y_1 = 1101$, $y_2 = 0011$, and $y_3 = 0110$.

At 104, for each section $x_j$ ($j = \{0,1, ..., q-1\}$), P0 can generate a first random bit $\langle lt_j \rangle_0^B \leftarrow \{0,1\}$. The first random bit is either 0 or 1. The first random bit can be regarded as a Boolean share that belongs to P0. Based on the first random bit $\langle lt_j \rangle_0^B$, P0 can generate a first group of M bits, each denoted as $s_{j,k}$, where $k = \{0,1, ..., M-1\}$, and $M = 2^m$. Each bit $s_{j,k}$ can be generated as $s_{j,k} = (\langle lt_j \rangle_0^B \oplus \mathbf{1}\{x_j < k\}) mod\ 2$.

As an example, for the section $x_0 = 1101$, P0 generates a first random bit 0 as $\langle lt_0 \rangle_0^B$. P0 then generates a first group of 16 bits, $s_{0,0}$ to $s_{0,15}$, where:

$$s_{0,0} = (\langle lt_0 \rangle_0^B \oplus \mathbf{1}\{x_0 < 0\}) mod\ 2 = 0 \oplus 0 = 0;$$

$$s_{0,1} = (\langle lt_0 \rangle_0^B \oplus \mathbf{1}\{x_0 < 1\}) mod\ 2 = 0 \oplus 0 = 0;$$

...

$$s_{0,13} = (\langle lt_0 \rangle_0^B \oplus \mathbf{1}\{x_0 < 13\}) mod\ 2 = 0 \oplus 0 = 0;$$

..., and

$$s_{0,15} = (\langle lt_0 \rangle_0^B \oplus \mathbf{1}\{x_0 < 15\}) mod\ 2 = 0 \oplus 1 = 1.$$

By invoking oblivious transfer (OT) protocol, P1 can select and obtain a first selected bit $s_{j,y_j} = (\langle lt_j \rangle_0^B \oplus \mathbf{1}\{x_j < y_j\}\ mod\ 2$ from the first group of M bits. The first selected bit $s_{j,y_j}$ can be denoted as a Boolean share $\langle lt_j \rangle_1^B$ that belongs to P1, since $\langle lt_j \rangle_0^B \oplus \langle lt_j \rangle_1^B = 1$ when $x_j < y_j$, and $\langle lt_j \rangle_0^B \oplus \langle lt_j \rangle_1^B = 0$ when $x_j \geq y_j$.

As an example, the section of $y$ that corresponds to $x_0 = 1101$ is $y_0 = 1101$ (equals 13 in decimal). Based on $y_0$, P1

selects and obtains the bit $s_{0,13}$ from the first group of 16 bits as the first selected bit. Therefore, $\langle lt_0 \rangle_1^B = s_{0,13} = 0$. Since $\langle lt_0 \rangle_0^B \oplus \langle lt_0 \rangle_1^B = 0 \oplus 0 = 0$, it indicates that $x_0 \geq y_0$.

In addition, for each section $x_j$ ($j = \{0,1, \ldots, q - 1\}$), P0 can generate a second random integer $\left\langle \mathrm{eq}_j \right\rangle_0^A \leftarrow \{0,1,\ldots,q\}$. The second random integer is sampled from 0 to q. The second random integer can be regarded as an arithmetic share that belongs to P0. Based on the second random integer $\left\langle \mathrm{eq}_j \right\rangle_0^A$, P0 can generate a second group of M bits, each denoted as $t_{j,k}$, where $k = \{0,1, \ldots, M - 1\}$, and $M = 2^m$. Each bit $t_{j,k}$ can be generated as $t_{j,k} = (\mathbf{1}\{x_j \neq k\} - \langle eq_j \rangle_0^A) \bmod (q + 1)$.

As an example, for the section $x_0 = 1101$, P0 generates a second random integer 3 as $\langle \mathrm{eq}_0 \rangle_0^A$. P0 then generates a group of 16 integers, $t_{0,0}$ to $t_{0,15}$, where:

$$t_{0,0} = (\mathbf{1}\{x_0 \neq 0\} - \langle eq_0 \rangle_0^A) \bmod (q + 1) = (1 - 3)\bmod 5 = 3,$$

$$t_{0,1} = (\mathbf{1}\{x_0 \neq 1\} - \langle eq_0 \rangle_0^A) \bmod (q + 1) = (1 - 3)\bmod 5 = 3,$$

$$\ldots,$$

$$t_{0,13} = (\mathbf{1}\{x_0 \neq 13\} - \langle eq_0 \rangle_0^A) \bmod (q + 1) = (0 - 3)\bmod 5 = 2,$$

$$\ldots, \text{ and}$$

$$t_{0,15} = (\mathbf{1}\{x_0 \neq 15\} - \langle eq_0 \rangle_0^A) \bmod (q + 1) = (1 - 3)\bmod 5 = 3.$$

By invoking the oblivious transfer (OT) protocol, P1 can select and obtain a second selected integer $t_{j,y_j} = (\mathbf{1}\{x_j \neq y_j\} - \langle eq_j \rangle_0^A) \bmod (q + 1)$ from the second group of M integers. The second selected integer $t_{j,y_i}$ can be denoted as an arithmetic share $\left\langle eq_j \right\rangle_1^A$ that belongs to P1, since $(\langle eq_j \rangle_0^A + \left\langle eq_j \right\rangle_1^A) \bmod 5 = 0$ when $x_j = y_j$, and $(\langle eq_j \rangle_0^A + \left\langle eq_j \right\rangle_1^A) \bmod 5 \neq 0$ when $x_j \neq y_j$.

As an example, the section of $y$ that corresponds to $x_0 = 1101$ is $y_0 = 1101$ (equals 13 in decimal). Based on $y_0$, P1 selects and obtains the integer $t_{0,13}$ from the second group of 16 integers as the second selected integer. Therefore, $\langle eq_0 \rangle_1^A = t_{0,13} = 2$. Since $(\langle eq_0 \rangle_0^A + \langle eq_0 \rangle_1^A) \bmod 5 = 0$, it indicates that $x_0 = y_0$.

At 106, P0 can output a secret share $\langle lt_j \rangle_0^B$ for each section $x_j$, a secret share $\langle eq_0 \rangle_0^A$ for each section $x_j$. P1 can output a secret share $\langle lt_j \rangle_1^B$ for each section $y_j$, a secret share $\langle eq_0 \rangle_1^A$ for each section $y_j$.

As an example in FIG. 1A, $\langle lt_0 \rangle_0^B, \langle lt_1 \rangle_0^B, \langle lt_2 \rangle_0^B$ and $\langle lt_3 \rangle_0^B$ can be 0, 1, 1, and 0, respectively; $\langle eq_0 \rangle_0^A$, $\langle eq_1 \rangle_0^A, \langle eq_2 \rangle_0^A$ and $\langle eq_3 \rangle_0^A$ can be 3, 2, 3 and 4, respectively; $\langle lt_0 \rangle_1^B, \langle lt_1 \rangle_1^B, \langle lt_2 \rangle_1^B$, and $\langle lt_3 \rangle_1^B$ can be 0, 0, 1 and 0, respectively, and $\langle eq_0 \rangle_1^A, \langle eq_1 \rangle_1^A, \langle eq_2 \rangle_1^A$ and $\langle eq_3 \rangle_1^A$ can be 2, 4, 2 and 1, respectively.

At 108, the secure MPC can identify the most significant section of $x$ and y that are not equal, by computing

$$\langle s_j \rangle_0^A = \left( \Sigma_{k=0}^j \langle eq_k \rangle_0^A - 2 \cdot \langle eq_j \rangle_0^A + 1 \right) mod(q+1) \qquad \text{for} \qquad \text{each} \qquad x_j, \qquad \text{and}$$

$\langle s_j \rangle_1^A = \left( \Sigma_{k=0}^j \langle eq_k \rangle_1^A - 2 \cdot \langle eq_j \rangle_1^A \right) mod(q+1)$ for each $y_j$. If $\left( \langle s_J \rangle_0^A + \langle s_J \rangle_1^A \right) mod (q+1) = 0$, it indicates that the J$^{th}$ section is the most significant section that $x_j \neq y_j$. Therefore, the secure MPC can compare whether $x < y$ by comparing whether $x_J < y_J$.

As an example in FIG. 1A, P0 outputs $\langle s_0 \rangle_0^A, \langle s_1 \rangle_0^A, \langle s_2 \rangle_0^A$ and $\langle s_3 \rangle_0^A$ as 3, 2, 3, and 0, respectively. P1 outputs $\langle s_0 \rangle_0^A, \langle s_1 \rangle_0^A, \langle s_2 \rangle_0^A$ and $\langle s_3 \rangle_0^A$ as 3, 3, 4, and 2, respectively. Since $\left( \langle s_0 \rangle_0^A + \langle s_0 \rangle_1^A \right) mod 5 \neq 0, \left( \langle s_1 \rangle_0^A + \langle s_1 \rangle_1^A \right) mod 5 = 0, \left( \langle s_2 \rangle_0^A + \langle s_2 \rangle_1^A \right) mod 5 \neq 0, \left( \langle s_4 \rangle_0^A + \langle s_4 \rangle_1^A \right) mod 5 \neq 0$, it indicates that the $x_1$ and $y_1$ are the most significant sections in $x$ and $y$ that are not equal. If $x_1 < y_1$, then $x < y$, which is equivalent to $a < b$.

At 110, for each $\langle s_j \rangle_0^A$ $(j = \{0,1,\dots,q-1\})$, P0 can generate a third random bit $\langle g_j \rangle_0^B \leftarrow \{0,1\}$. The third random bit is either 0 or 1. The third random bit can be regarded as a Boolean share that belongs to P0. Based on the third random bit $\langle g_j \rangle_0^B$, P0 can generate a third group of (q+1) bits, each denoted as $t_{j,k}$, where $k = \{0,1,\dots,q\}$. Each bit $t_{j,k}$ can be generated as $t_{j,k} = \langle g_j \rangle_0^B \oplus \left( 1\{\langle s_j \rangle_0^A = k\} AND \langle lt_j \rangle_0^B \right)$.

As an example, for $\langle s_0 \rangle_0^A = 3$, P0 generates a third random bit 0 as $\langle g_0 \rangle_0^B$. P0 then generates a third group of 5 bits, $t_{0,0}$ to $t_{0,5}$, where:

$$t_{0,0} = \langle g_0 \rangle_0^B \oplus (1\{\langle s_0 \rangle_0^A = 0\} AND \langle lt_0 \rangle_0^B) = 0 \oplus (0 \text{ AND } 0) = 0$$

$$t_{0,1} = \langle g_0 \rangle_0^B \oplus (1\{\langle s_0 \rangle_0^A = 1\} AND \langle lt_0 \rangle_0^B) = 0 \oplus (0 \text{ AND } 0) = 0$$

$$t_{0,2} = \langle g_0 \rangle_0^B \oplus (1\{\langle s_0 \rangle_0^A = 2\} AND \langle lt_0 \rangle_0^B) = 0 \oplus (0 \text{ AND } 0) = 0$$

$$t_{0,3} = \langle g_0 \rangle_0^B \oplus (1\{\langle s_0 \rangle_0^A = 3\} AND \langle lt_0 \rangle_0^B) = 0 \oplus (1 \text{ AND } 0) = 0$$

$$t_{0,4} = \langle g_0 \rangle_0^B \oplus (1\{\langle s_0 \rangle_0^A = 4\} AND \langle lt_0 \rangle_0^B) = 0 \oplus (0 \text{ AND } 0) = 0$$

By invoking OT protocol, P1 can select and obtain a third selected bit from the third group of (q+1) bits. The third selected bit $t_{j,Z} = \langle g_j \rangle_0^B \oplus \left( 1\{\langle s_j \rangle_0^A = Z\} AND \langle lt_j \rangle_0^B \right)$, where $Z = \left[ -\langle s_j \rangle_1^A \right] mod (q+1)$. The third selected bit $t_{j,Z}$ can be denoted as a Boolean share $\langle g_j \rangle_1^B$ that belongs to P1.

As an example, for $\langle s_0 \rangle_0^A = 3$, since $Z = [-\langle s_0 \rangle_1^A] mod (q+1) = -3 mod 5 = 2$, P1 selects and obtains the third selected bit $\langle g_0 \rangle_1^B = t_{0,2} = 0$.

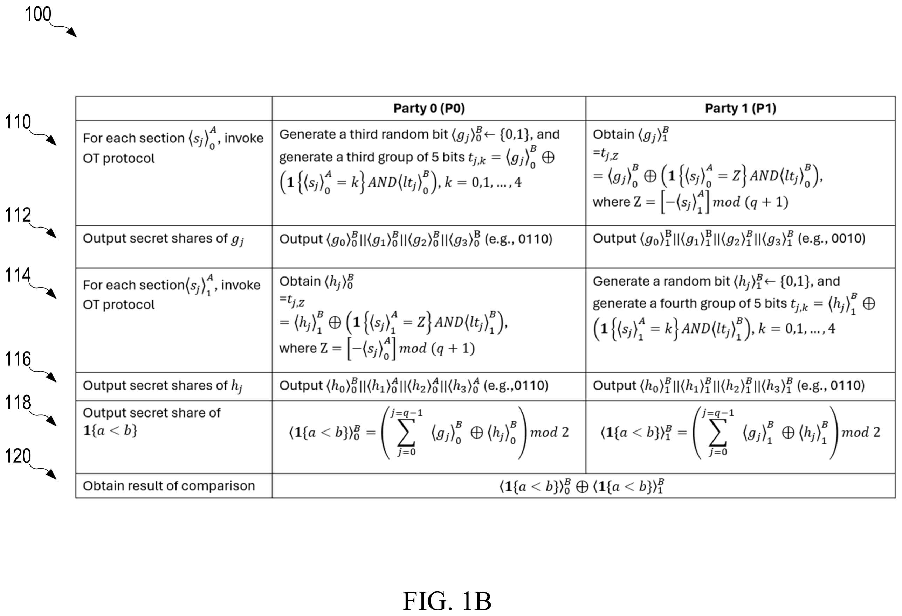

At 112, P0 can output a secret share $\langle g_j \rangle_0^B$ for each $\langle s_j \rangle_0^A$. P1 can output a secret share $\langle g_j \rangle_0^B$ for each $\langle s_j \rangle_0^A$. As an example in FIG. 1B, $\langle g_0 \rangle_0^B, \langle g_1 \rangle_0^B, \langle g_2 \rangle_0^B$ and $\langle g_3 \rangle_0^B$ can be 0, 1, 1, and 0, respectively, and $\langle g_0 \rangle_1^B, \langle g_1 \rangle_1^B, \langle g_2 \rangle_1^B$ and $\langle g_3 \rangle_1^B$ can be 0, 0, 1, and 0, respectively.

At 114, for each $\langle s_j \rangle_1^A$ $(j = \{0,1,\dots,q-1\})$, P1 can generate a fourth random bit $\langle h_j \rangle_1^B \leftarrow \{0,1\}$. The fourth random bit is either 0 or 1. The fourth random bit can be regarded as a Boolean share that belongs to P1. Based on the fourth random bit $\langle h_j \rangle_1^B$, P1 can generate a fourth group of (q+1) bits, each denoted as $t_{j,k}$, where $k = \{0,1,\dots,q\}$. Each bit $t_{j,k}$ can be generated as $t_{j,k} = \langle h_j \rangle_1^B \oplus \left( 1\{\langle s_j \rangle_1^A = k\} AND \langle lt_j \rangle_1^B \right)$.

As an example in FIG. 1B, for $\langle s_0 \rangle_1^A = 3$, P1 generates a fourth random bit 0 as $\langle h_0 \rangle_1^B$. P1 then generates a fourth group of 5 bits, $t_{0,0}$ to $t_{0,5}$, where:

$$t_{0,0} = \langle h_0 \rangle_1^B \oplus (1\{\langle s_0 \rangle_1^A = 0\} AND \langle lt_0 \rangle_1^B) = 0 \oplus (0 \text{ AND } 0) = 0$$

$$t_{0,1} = \langle h_0 \rangle_1^B \oplus (1\{\langle s_0 \rangle_1^A = 1\} AND \langle lt_0 \rangle_1^B) = 0 \oplus (0 \text{ AND } 0) = 0$$

$$t_{0,2} = \langle h_0 \rangle_1^B \oplus (1\{\langle s_0 \rangle_1^A = 2\} AND \langle lt_0 \rangle_1^B) = 0 \oplus (0 \text{ AND } 0) = 0$$

$$t_{0,3} = \langle h_0 \rangle_1^B \oplus (1\{\langle s_0 \rangle_1^A = 3\} AND \langle lt_0 \rangle_1^B) = 0 \oplus (1 \text{ AND } 0) = 0$$

$$t_{0,4} = \langle h_0 \rangle_1^B \oplus (1\{\langle s_0 \rangle_1^A = 4\} AND \langle lt_0 \rangle_1^B) = 0 \oplus (0 \text{ AND } 0) = 0$$

By invoking OT protocol, P0 can select and obtain a fourth selected bit from the fourth group of (q+1) bits. The fourth selected bit $t_{j,z} = \langle h_j \rangle_1^B \oplus \left( 1\left\{ \langle s_j \rangle_1^A = Z \right\} AND \langle lt_j \rangle_1^B \right)$, where $Z = \left[ -\langle s_j \rangle_0^A \right] mod\,(q+1)$. The fourth selected bit can be denoted as a Boolean share $\langle h_j \rangle_0^B$ that belongs to P0.

As an example, for $\langle s_0 \rangle_1^A = 3$, since $Z = [-\langle s_0 \rangle_0^A] mod\,(q+1) = -3\,mod\,5 = 2$, P0 selects and obtains the fourth selected bit $\langle h_0 \rangle_0^B = t_{0,2} = 0$.

At 116, P0 can output a secret share $\langle h_j \rangle_0^B$ for each $\langle s_j \rangle_1^A$. P1 can output a secret share $\langle h_0 \rangle_1^B$ for each $\langle s_j \rangle_1^A$. As an example in FIG. 1B, $\langle h_0 \rangle_0^B, \langle h_1 \rangle_0^B, \langle h_2 \rangle_0^B$ and $\langle h_3 \rangle_0^B$ can be 0, 1, 1, and 0, respectively, and $\langle h_0 \rangle_1^B, \langle h_1 \rangle_1^B, \langle h_2 \rangle_1^B$ and $\langle h_3 \rangle_1^B$ can be 0, 1, 1, and 0, respectively.

At 118, P0 can compute $\left( \sum_{j=0}^{j=q-1} \langle g_j \rangle_0^B \oplus \langle h_j \rangle_0^B \right) mod\,2$. The result can be a Boolean share of **1**{a < b} that belongs to P0, denoted as $\langle \mathbf{1}\{a < b\} \rangle_0^B$. P1 can compute $\left( \sum_{j=0}^{j=q-1} \langle g_j \rangle_1^B \oplus \langle h_j \rangle_1^B \right) mod\,2$. The result can be a Boolean share of **1**{a < b} that belongs to P1, denoted as $\langle \mathbf{1}\{a < b\} \rangle_1^B$.

As an example in FIG. 1B,

$$\langle \mathbf{1}\{a < b\} \rangle_0^B = (\langle g_0 \rangle_0^B \oplus \langle h_0 \rangle_0^B + \langle g_1 \rangle_0^B \oplus \langle h_1 \rangle_0^B + \langle g_2 \rangle_0^B \oplus \langle h_2 \rangle_0^B + \langle g_3 \rangle_0^B \oplus \langle h_3 \rangle_0^B) mod\,2 = 0 \quad ;$$

$$\langle \mathbf{1}\{a < b\} \rangle_1^B = (\langle g_0 \rangle_1^B \oplus \langle h_0 \rangle_1^B + \langle g_1 \rangle_1^B \oplus \langle h_1 \rangle_1^B + \langle g_2 \rangle_1^B \oplus \langle h_2 \rangle_1^B + \langle g_3 \rangle_1^B \oplus \langle h_3 \rangle_1^B) mod\,2 = 1 \,.$$

At 120, the secure MPC can obtain the result of the comparison by computing $\langle \mathbf{1}\{a < b\} \rangle_0^B \oplus \langle \mathbf{1}\{a < b\} \rangle_1^B$. $\langle \mathbf{1}\{a < b\} \rangle_0^B \oplus \langle \mathbf{1}\{a < b\} \rangle_1^B = 1$ indicates that *a < b*, $\langle \mathbf{1}\{a < b\} \rangle_0^B \oplus \langle \mathbf{1}\{a < b\} \rangle_1^B = 0$ indicates that *a ≥ b.*

Below is an example algorithm for process 100.

$P_0$ and $P_1$ locally computes $\langle d \rangle_0^A = \langle a \rangle_0^A - \langle b \rangle_0^A$ and $\langle d \rangle_1^A = \langle a \rangle_1^A - \langle b \rangle_1^A$ .

$P_0$ and $P_1$ set $x_0 = \langle d \rangle_0^A$ and $y_0 = -\langle d \rangle_1^A$, respectively.

$P_0$ parses its input as $x = x_0 || \dots || x_{q-1}$ and $P_1$ parses its input as $y = y_0 || \dots || y_{q-1}$, where $x_j, y_j \in \{0,1\}^m$, $q = \lceil l/m \rceil$, the bit lengths of $x$ and $y$ are equal, denoted as $l$.

Let $M = 2^m$.

**for** $j = \{0,1,\dots,q-1\}$ **do**

 $P_0$ samples $\langle lt_j \rangle_0^B \leftarrow \{0,1\}$

 $P_0$ samples $\langle eq_j \rangle_0^A \leftarrow \{0,1,\dots,q\}$

 **for** $k = \{0,1,\dots,M-1\}$ **do**

  $P_0$ sets $s_{j,k} = (\langle lt_j \rangle_0^B \oplus 1\{x_j < k\}) \bmod 2$

  $P_0$ sets $t_{j,k} = (1\{x_j \neq k\} - \langle eq_j \rangle_0^A) \bmod (q+1)$

**end for**

$P_0$ and $P_1$ invoke an instance of 1 out of $M$ OT where $P_0$ is the sender with inputs

$\{s_{j,k}\}_k$ and $P_1$ is the receiver with input $y_j$. $P_1$ sets its output as $\langle lt_j \rangle_1^B$.

$P_0$ and $P_1$ invoke an instance of 1 out of $M$ OT where $P_0$ is the sender with inputs

$\{t_{j,k}\}_k$ and $P_1$ is the receiver with input $y_j$. $P_1$ sets its output as $\langle eq_j \rangle_1^A$.

$P_0$ computes $\langle s_j \rangle_0^A = (\sum_{k=0}^{j} \langle eq_k \rangle_0^A - 2 \cdot \langle eq_j \rangle_0^A + 1) \, mod(q+1)$.

$P_1$ computes $\langle s_j \rangle_1^A = (\sum_{k=0}^{j} \langle eq_k \rangle_1^A - 2 \cdot \langle eq_j \rangle_1^A) \, mod(q+1)$.

**end for**

**for** $j = \{0,1,\dots,q-1\}$ **do**

    $P_0$ samples $\langle g_j \rangle_0^B \leftarrow \{0,1\}$

    **for** $k = \{0,1,\dots,q\}$ **do**

        $P_0$ sets $t_{j,k} = \langle g_j \rangle_0^B \oplus \left( 1\left\{ \langle s_j \rangle_0^A = k \right\} AND \langle lt_j \rangle_0^B \right)$

    **end for**

    $P_0$ and $P_1$ invoke an instance of 1 out of $(q+1)$ OT where $P_0$ is the sender with inputs

$\{t_{j,k}\}_k$ and $P_1$ is the receiver with input $\left[ -\langle s_j \rangle_1^A \right] mod\,(q+1)$. $P_1$ sets its output as $\langle g_j \rangle_1^B$

**end for**

**for** $j = \{0,1,\dots,q-1\}$ **do**

    $P_1$ samples $\langle h_j \rangle_1^B \leftarrow \{0,1\}$

    **for** $k = \{0,1,\dots,q\}$ **do**

        $P_1$ sets $t_{j,k} = \langle h_j \rangle_1^B \oplus \left( 1\left\{ \langle s_j \rangle_1^A = k \right\} AND \langle lt_j \rangle_1^B \right)$

    **end for**

    $P_0$ and $P_1$ invoke an instance of 1 out of $(q+1)$ OT where $P_1$ is the sender with inputs

$\{t_{j,k}\}_k$ and $P_0$ is the receiver with input $\left[ -\langle s_j \rangle_0^A \right] mod\,(q+1)$. $P_0$ sets its output as $\langle h_j \rangle_0^B$.

**end for**

$P_0$ sets its output as $\left( \sum_{j=0}^{j=q-1} \langle g_j \rangle_0^B \oplus \langle h_j \rangle_0^B \right) mod\,2$. $P_1$ sets its output as $(\sum_{j=0}^{j=q-1} \langle g_j \rangle_1^B \oplus$

$\langle h_j \rangle_1^B) \, mod\,2$.

In some implementations, at 104, the second random integer $\langle eq_j \rangle_0^A$ and the second selected integer $\langle eq_j \rangle_1^A$ can be generated by first generating a random bit $\langle eq_j \rangle_0^B$ and a selected bit $\langle eq_j \rangle_1^B$, and then converting $\langle eq_j \rangle_0^B$ and $\langle eq_j \rangle_1^B$ to $\langle eq_j \rangle_0^A$ and $\langle eq_j \rangle_1^A$. $\langle eq_j \rangle_0^B$ and $\langle eq_j \rangle_1^B$ are Boolean shares of an indicator bit (e.g., 1{$x_j \neq y_j$}) that indicates whether $x_j = y_j$, such that $\langle eq_j \rangle_0^B \oplus \langle eq_j \rangle_1^B = 0$ when $x_j = y_j$, and $\langle eq_j \rangle_0^B \oplus \langle eq_j \rangle_1^B = 1$ when $x_j \neq y_j$. $\langle eq_j \rangle_0^A$ and

$\langle eq_j \rangle_1^A$ are arithmetic shares of the indicator bit (e.g., $\mathbf{1}\{x_j \neq y_j\}$) that indicates whether $x_j = yj$, such that $(\langle eq_j \rangle_0^A + \langle eq_j \rangle_1^A) \bmod (q+1) = 0$ when $x_j = yj$, and $(\langle eq_j \rangle_0^A + \langle eq_j \rangle_1^A) \bmod (q+1) \neq 0$ when $x_j \neq y_j$.

At 104, for each section $x_j$ ($j = \{0, 1, \ldots, q - 1\}$), P0 can generate a random bit $\langle eq_j \rangle_0^B \leftarrow \{0,1\}$. The random bit is either 0 or 1. The random bit can be regarded as a Boolean share that belongs to P0. Based on the random bit $\langle eq_j \rangle_0^B$, P0 can generate a group of M bits, each denoted as $t_{j,k}$, where $k = \{0, 1, \ldots, M - 1\}$, and $M = 2^m$. Each bit $t_{j,k}$ can be generated as $t_{j,k} = \langle eq_j \rangle_0^B \oplus \mathbf{1}\{x_j \neq k\}$.

As an example, for the section $x_0 = 1101$, P0 generates a random bit I as $\langle eq_0 \rangle_0^B$. P0 then generates a group of 16 bits, $t_{0,0}$ to $t_{0,15}$, where:

$$t_{0,0} = \langle eq_0 \rangle_0^B \oplus \mathbf{1}\{x_0 \neq 0\} = 1 \oplus 1 = 0,$$

$$t_{0,1} = \langle eq_0 \rangle_0^B \oplus \mathbf{1}\{x_0 \neq 1\} = 1 \oplus 1 = 0,$$

...,

$$t_{0,13} = \langle eq_0 \rangle_0^B \oplus \mathbf{1}\{x_0 \neq 13\} = 1 \oplus 0 = 1,$$

..., and

$$t_{0,15} = \langle eq_0 \rangle_0^B \oplus \mathbf{1}\{x_0 \neq 15\} = 1 \oplus 0 = 0.$$

By invoking OT protocol, P1 can select and obtain a selected bit $t_{j,y_j} = \langle eq_j \rangle_0^B \oplus \mathbf{1}\{x_j \neq y_j\}$ from the group of M bits. The selected bit $s_{j,y_j}$ can be denoted as a Boolean share $\langle eq_j \rangle_1^B$ that belongs to P1, since $\langle eq_j \rangle_0^B \oplus \langle eq_j \rangle_1^B = 0$ when $x_j = y_j$, and $\langle eq_j \rangle_0^B \oplus \langle eq_j \rangle_1^B = 1$ when $x_j \neq y_j$.

As an example, the section of $y$ that corresponds to $x_0 = 1101$ is $y_0 = 1101$ (equals 13 in decimal). Based on $y_0$, P1 selects and obtains the bit $t_{0,13}$ from the group of 16 bits as the selected bit. Therefore, $\langle eq_0 \rangle_1^B = t_{0,13} = 1$. Since $\langle eq_0 \rangle_0^B \oplus \langle eq_0 \rangle_1^B = 1 \oplus 1 = 0$, it indicates that $x_0 = y_0$.

As such, P0 can output a secret share $\langle eq_j \rangle_0^B$ for each section $x_j$. P1 can output a secret share $\langle eq_j \rangle_1^B$ for each section $y_j$.

As an example, $\langle eq_0 \rangle_0^B, \langle eq_1 \rangle_0^B, \langle eq_2 \rangle_0^B$ and $\langle eq_3 \rangle_0^B$ can be 1, 0, 0 and 1, respectively; and $\langle eq_0 \rangle_1^A, \langle eq_1 \rangle_1^A, \langle eq_2 \rangle_1^A$ and $\langle eq_3 \rangle_1^A$ can be 1, 1, 0 and 1, respectively.

For each $\langle eq_j \rangle_0^B$, P0 can generate a random integer $\langle eq_j \rangle_0^A \leftarrow \{0, 1, \ldots, q\}$ (e.g., the second random integer). The random integer is sampled from 0 to q. The random integer can be regarded as an arithmetic share that belongs to P0. Based on the random integer $\langle eq_j \rangle_0^A$, P0 can generate a group of 2 integers, each denoted as $t_{j,k}$, where $k = \{0, 1\}$. Each integer $t_{j,k}$ can be generated as $\left( \mathbf{1}\{\langle eq_j \rangle_0^B \neq k\} - \langle eq_j \rangle_0^A \right) \bmod (q+1)$.

As an example, for $\langle eq_0 \rangle_0^B = 1$, P0 generates a random integer 3 as $\langle eq_0 \rangle_0^A$. P0 then generates a group of 2 integers, $t_{0,0}$ and $t_{0,2}$, where:

$$t_{0,0} = (1\{\langle eq_0\rangle_0^B \neq 0\} - \langle eq_0\rangle_0^A) \bmod (q+1) = (1-3) \bmod 5 = 3,$$

$$t_{0,1} = (1\{\langle eq_0\rangle_0^B \neq 1\} - \langle eq_0\rangle_0^A) \bmod (q+1) = (0-3) \bmod 5 = 2.$$

By invoking OT protocol, P1 can select and obtain a selected integer $t_{j,Z} = \left(1\left\{\langle eq_j\rangle_0^B \neq Z\right\} - \langle eq_j\rangle_0^A\right) \bmod (q+1)$ from the two integers, where $Z = \langle eq_j\rangle_1^B$. The selected integer $t_{j,Z}$ can be denoted as an arithmetic share $\langle eq_j\rangle_1^A$ (e.g., the second selected integer) that belongs to P1. As an example, based on $\langle eq_0\rangle_1^B = 1$, P1 selects and obtains $\langle eq_0\rangle_1^A = t_{0,1} = 2$.

As such, the Boolean shares $\langle eq_j\rangle_0^B$ and $\langle eq_j\rangle_1^B$ are converted to arithmetic shares $\langle eq_j\rangle_0^A$ and $\langle eq_j\rangle_1^A$. The process 100 can then proceed to 106.

Below is an example algorithm for process 100, where arithmetic shares $\langle eq_j\rangle_0^A$ and $\langle eq_j\rangle_1^A$ are generated by first generating Boolean shares $\langle eq_j\rangle_0^B$ and $\langle eq_j\rangle_1^B$, and then converting Boolean shares into arithmetic shares.

---

$P_0$ and $P_1$ locally computes $\langle d\rangle_0^A = \langle a\rangle_0^A - \langle b\rangle_0^A$ and $\langle d\rangle_1^A = \langle a\rangle_1^A - \langle b\rangle_1^A$.

$P_0$ and $P_1$ set $x_0 = \langle d\rangle_0^A$ and $y_0 = -\langle d\rangle_1^A$, respectively.

$P_0$ parses its input as $x = x_{q-1}||\ldots||x_0$ and $P_1$ parses its input as $y = y_{q-1}||\ldots||y_0$, where $x_j, y_j \in \{0,1\}^m$, $q = \lceil l/m \rceil$, the bit lengths of $x$ and $y$ are equal, denoted as $l$.

Let $M = 2^m$.

**for** $j = \{0,1,\ldots,q-1\}$ **do**

    $P_0$ samples $\langle lt_j\rangle_0^B$, $\langle eq_j\rangle_0^B \leftarrow \{0,1\}$

    **for** $k = \{0,1,\ldots,M-1\}$ **do**

        $P_0$ sets $s_{j,k} = \langle lt_j\rangle_0^B \oplus 1\{x_j < k\}$

        $P_0$ sets $t_{j,k} = \langle eq_j\rangle_0^B \oplus 1\{x_j \neq k\}$

    **end for**

    $P_0$ and $P_1$ invoke an instance of 1 out of $M$ OT where $P_0$ is the sender with inputs $\{s_{j,k}\}_k$ and $P_1$ is the receiver with input $y_j$. $P_1$ sets its output as $\langle lt_j\rangle_1^B$.

    $P_0$ and $P_1$ invoke an instance of 1 out of $M$ OT where $P_0$ is the sender with inputs

---

$\{t_{j,k}\}_k$ and $P_1$ is the receiver with input $y_j$. $P_1$ sets its output as $\langle eq_j \rangle_1^B$.

**end for**

**for** $j = \{0,1,\ldots,q-1\}$ **do**

    $P_0$ samples $\langle eq_j \rangle_0^A \leftarrow \{0,1,\ldots,q\}$

    **for** $k = \{0,1\}$ **do**

        $P_0$ sets $t_{j,k} = \left( 1\left\{ \langle eq_j \rangle_0^B \neq k \right\} - \langle eq_j \rangle_0^A \right) mod\ (q+1)$

    **end for**

    $P_0$ and $P_1$ invoke an instance of 1 out of 2 OT where $P_0$ is the sender with inputs $\{t_{j,k}\}_k$

and $P_1$ is the receiver with input $\langle eq_j \rangle_1^B$. $P_1$ sets its output as $\langle eq_j \rangle_1^A$.

    $P_0$ computes $\langle s_j \rangle_0^A = (\sum_{k=0}^{j} \langle eq_k \rangle_0^A - 2 \cdot \langle eq_j \rangle_0^A + 1)\ mod(q+1)$.

    $P_1$ computes $\langle s_j \rangle_1^A = (\sum_{k=0}^{j} \langle eq_k \rangle_1^A - 2 \cdot \langle eq_j \rangle_1^A)\ mod(q+1)$.

**end for**

**for** $j = \{0,1,\ldots,q-1\}$ **do**

    $P_0$ samples $\langle g_j \rangle_0^B \leftarrow \{0,1\}$

    **for** $k = \{0,1,\ldots,q\}$ **do**

        $P_0$ sets $t_{j,k} = \langle g_j \rangle_0^B \oplus \left( 1\left\{ \langle s_j \rangle_0^A = k \right\} AND \langle lt_j \rangle_0^B \right)$

    **end for**

    $P_0$ and $P_1$ invoke an instance of 1 out of $(q+1)$ OT where $P_0$ is the sender with inputs

$\{t_{j,k}\}_k$ and $P_1$ is the receiver with input $\left[ -\langle s_j \rangle_1^A \right] mod\ (q+1)$. $P_1$ sets its output as $\langle g_j \rangle_1^B$

**end for**

**for** $j = \{0,1,\ldots,q-1\}$ **do**

    $P_1$ samples $\langle h_j \rangle_1^B \leftarrow \{0,1\}$

    **for** $k = \{0,1,\ldots,q\}$ **do**

        $P_1$ sets $t_{j,k} = \langle h_j \rangle_1^B \oplus \left( 1\left\{ \langle s_j \rangle_1^A = k \right\} AND \langle lt_j \rangle_1^B \right)$

    **end for**

    $P_0$ and $P_1$ invoke an instance of 1 out of $(q+1)$ OT where $P_1$ is the sender with inputs

$\{t_{j,k}\}_k$ and $P_0$ is the receiver with input $\left[ -\langle s_j \rangle_0^A \right] mod\ (q+1)$. $P_0$ sets its output as $\langle h_j \rangle_0^B$

**end for**

$$P_0 \text{ sets its output as } \left( \sum_{j=0}^{j=q-1} \langle g_j \rangle_0^B \oplus \langle h_j \rangle_0^B \right) mod\ 2. \ P_1 \text{ sets its output as } (\sum_{j=0}^{j=q-1} \langle g_j \rangle_1^B \oplus$$

$$\langle h_j \rangle_1^B) \ mod\ 2.$$

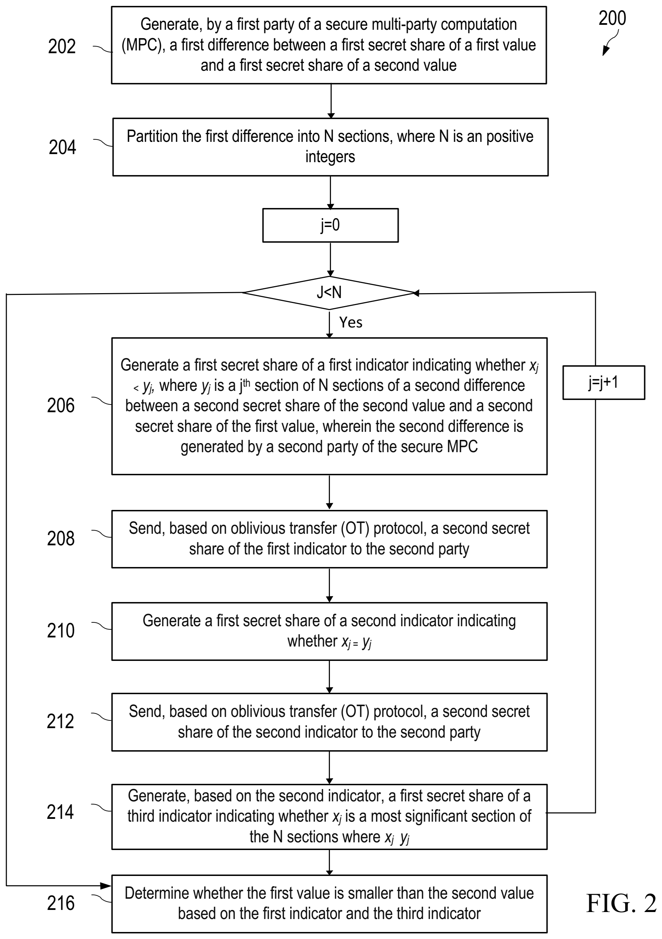

FIG. 2 illustrates a flow chart of the example method 200 of performing comparison as shown in FIGS. 1A-1B. The operations shown in method 200 may not be exhaustive and that other operations can be performed as well before, after, or in between any of the illustrated operations. Further, some of the operations may be performed simultaneously, or in a different order than shown in FIG. 2. In some implementations, some of the operations may be performed by a computer, or multiple computers based on secure MPC.

At 202, a first party (e.g., P0 of FIG. 1A) of a secure multi-party computation (MPC) generates a first difference (e.g., $x$ of FIG. 1A) between a first secret share (e.g., arithmetic share $\langle a \rangle_0^A$) of a first value (e.g., $a$) and a first secret share (e.g., arithmetic share $\langle b \rangle_0^A$) of a second value (e.g., $b$). A second party (e.g., P1 of FIG. 1A) of the secure MPC generates a second difference (e.g., $y$ of FIG. 1A) between a second secret share (e.g., arithmetic share $\langle b \rangle_1^A$) of the second value and a second secret share (e.g., arithmetic share $\langle a \rangle_1^A$) of the first value.

At 204, the first party partitions the first difference into N sections (e.g., $x = x_0 \| x_1 ... \| x_{N-1}$). Each section can include M bits, where N and M are positive integers. The second party partitions the second difference into N sections (e.g., $y = y_0 \| y_1 ... \| y_{N-1}$), each including M bits.

For each section, e.g., a $j^{th}$ section ($x_j$) of the first difference, where $j = 0,1, ... , N$ - 1:

At 206, the first party generates a first secret share of a first indicator (e.g., $\langle lt_j \rangle_0^B$) indicating whether $x_j < y_j$, where $y_j$ is a $j^{th}$ section of N sections of the second difference.

At 208, the first party sends, based on oblivious transfer (OT) protocol, a second secret share of the first indicator (e.g., $\langle lt_j \rangle_1^B$) to the second party.

In some implementations, as shown in 104 of FIG. 1A, generating the first secret share of the first indicator includes generating a first random bit as the first secret share of the first indicator, and generating, based on the first random bit, a first group of $2^M$ bits. Sending the second secret share of the first indicator to the second party includes sending a bit selected from the first group of $2^M$ bits as the second secret share of the first indicator, where the bit is selected based on $y_j$.

At 210, the first party generates a first secret share of a second indicator (e.g., $\langle eq_j \rangle_0^A$) indicating whether $x_j = y_j$.

At 212, the first party sends, based on OT protocol, a second secret share of the second indicator (e.g., $\langle eq_j \rangle_1^A$) to the second party.

In some implementations, as shown in 104 of FIG. 1A, generating the first secret share of the second indicator includes generating a second random integer between 0 and N as the first secret share of the second indicator, and generating, based on the second random integer, a second group of $2^M$ integers. Sending the second secret share of the second indicator to the second party includes sending an integer selected from the second group of $2^M$ integers as the second secret share of the second indicator, where the integer is selected based on $y_j$.

In some implementations, generating the first secret share of the second indicator includes generating a random bit (e.g., $\langle eq_j \rangle_0^B$), generating, based on the random bit, a group of $2^M$ bits, wherein a bit (e.g., $\langle eq_j \rangle_1^B$) is selected from the group of $2^M$ bits based on a value of $y_j$, generating a random integer as the first secret share of the second indicator, and generating, based on the random integer, two integers. An integer is selected, based on the bit selected from the group of $2^M$ bits, from the two integers as the second secret share of the second indicator.

At 214, the first party generates, based on the second indicator, a first secret share of a third indicator (e.g., $\langle s_j \rangle_0^A$) indicating whether $x_j$ is a most significant section of the N sections where $x_j \neq y_j$. The second party generates, based on the second indicator, a second secret share of the third indicator (e.g., $\langle s_j \rangle_1^A$).

In some implementations, the first secret share of the third indicator is generated by computing $\left( \sum_{k=0}^{j} \langle eq_k \rangle_0^A - 2 \cdot \langle eq_j \rangle_0^A + 1 \right) mod\ (N + 1)$, where $\langle eq_k \rangle_0^A$ is the first secret share of the second indicator corresponding to a $k^{th}$ section of the N sections. The first secret share of the third indicator is generated by computing

$$\left( \sum_{k=0}^{j} \langle eq_k \rangle_1^A - 2 \cdot \langle eq_j \rangle_1^A \right) mod\ (N+1).$$

At 216, after generating secret shares of the first indicator, the second indicator, and the third indicator for all the sections, the secure MPC can determine whether the first value is smaller than the second value based on the first indicator and the third indicator.

In some implementations, as shown in 110-118 of FIG. 1B, determining whether the first value is smaller than the second value includes performing an exclusive OR (XOR) operation on the first secret share of the first indicator corresponding to a $R^{th}$ section of the N sections, and the second secret share of the first indicator corresponding to the $R^{th}$ section, wherein the $R^{th}$ section is the most significant section where $x_R \neq y_R$.

In some implementations, the first secret share of the first indicator and the second secret share of the first indicator are Boolean shares, the first secret share of the first indicator and the second secret share of the second indicator are arithmetic shares, and the first secret share of the first indicator and a second secret share of the third indicator are arithmetic shares.

In some implementations, the secure MPC is a secure two-party computation.

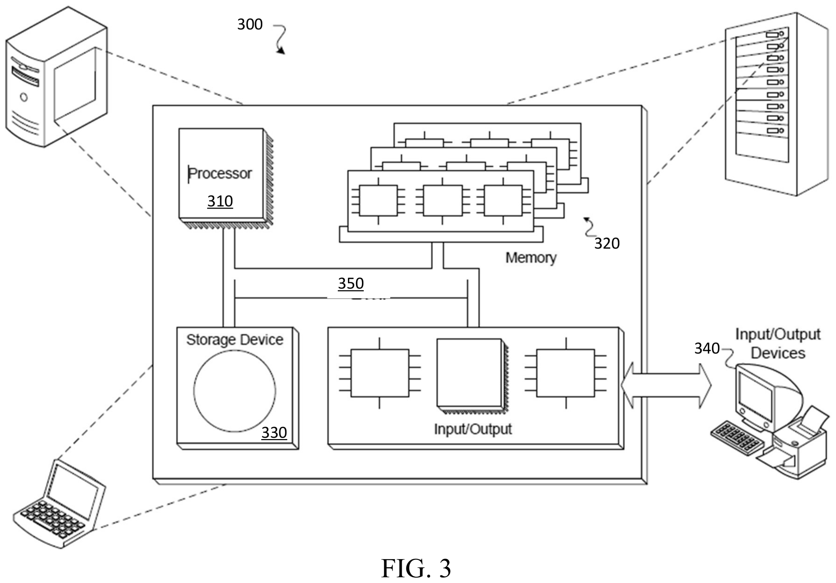

FIG. 3 illustrates a schematic diagram of an example computing system 300. The system 300 can be used for the operations described in association with the implementations described herein. For example, the system 300 may be included in computing devices of the one or more online components and/or the one or more offline components. The system 300 includes a processor 310, a memory 320, a storage device 330, and an input/output device 340, which are interconnected using a system bus 350. The processor 310 is capable of processing instructions for execution within the system 300. In some implementations, the processor 310 is a single-threaded processor. The processor 310 is a multi-threaded processor. The processor 310 is capable of processing instructions stored in the memory 320 or on the storage device 330 to display graphical information for a user interface on the input/output device 340.

The memory 320 stores information within the system 300. In some implementations, the memory 320 is a computer-readable medium. The memory 320 can be a volatile memory unit or a non-volatile memory unit. The storage device 330 is capable of providing mass storage for the system 300. The storage device 330 is a computer-readable medium. The storage device 330 may be a floppy disk device, a hard disk device, an optical disk device, or a tape device. The input/output device 340 provides input/output operations for the system 300. The input/output device 340 includes a keyboard and/or pointing device. The input/output device 340 includes a display unit for displaying graphical user interfaces.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random-access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship with each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of what may be claimed, but rather as descriptions of features that may be specific to particular implementations. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features may be described as acting in certain combinations and even initially claimed as such, one or more features from a claimed combination can, in some cases, be excised from the combination, and the claimed combination may be directed to a sub-combination or variation of a sub-combination.

As used in this disclosure, the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, the phraseology or terminology employed in this disclosure, and not otherwise defined, is for the purpose of description only and not of limitation. Any use of section headings is intended to aid reading of the document and is not to be interpreted as limiting; information that is relevant to a section heading may occur within or outside of that particular section.

As used in this disclosure, the term "about" or "approximately" can allow for a degree of variability in a value or range, for example, within 10%, within 5%, or within 1% of a stated value or of a stated limit of a range.

As used in this disclosure, the term "substantially" refers to a majority of, or mostly, as in at least about 50%, 60%, 70%, 80%, 90%, 95%, 96%, 97%, 98%, 99%, 99.5%, 99.9%, 99.99%, or at least about 99.999% or more.

Values expressed in a range format should be interpreted in a flexible manner to include not only the numerical values explicitly recited as the limits of the range, but also the individual numerical values or sub-ranges encompassed within that range as if each numerical value and sub-range is explicitly recited. For example, a range of "0.1% to about 5%" or "0.1% to 5%" should be interpreted to include about 0.1% to about 5%, as well as the individual values (for example, 1%, 2%, 3%, and 4%) and the sub-ranges (for example, 0.1% to 0.5%, 1.1% to 2.2%, 3.3% to 4.4%) within the indicated range. The statement "X to Y" has the same meaning as "about X to about Y," unless indicated otherwise. Likewise, the statement "X, Y, or Z" has the same meaning as "about X, about Y, or about Z," unless indicated otherwise.

Particular implementations of the subject matter have been described. Other implementations, alterations, and permutations of the described implementations are within the scope of the following claims as will be apparent to those skilled in the art. While operations are depicted in the drawings or claims in a particular order, such operations are not required to be performed in the particular order shown or in sequential order, or that all illustrated operations be performed (some operations may be considered optional), to achieve desirable results. In certain circumstances, multitasking or parallel processing (or a combination of multitasking and parallel processing) may be advantageous and performed as deemed appropriate.

Moreover, the separation or integration of various system modules and components in the previously described implementations are not required in all implementations, and the described components and systems can generally be integrated together or packaged into multiple products.

Accordingly, the previously described example implementations do not define or constrain the present disclosure.

The foregoing description of the specific implementations can be readily modified and/or adapted for various applications. Therefore, such adaptations and modifications are intended to be within the meaning and range of equivalents of the disclosed implementations, based on the teaching and guidance presented herein.

The breadth and scope of the present disclosure should not be limited by any of the above-described example implementations, but should be defined only in accordance with the following claims and their equivalents. Accordingly, other implementations also are within the scope of the claims.

## Claims

1. A computer-implemented method (100), comprising:

   generating, by a first party of a secure multi-party computation (MPC), a first difference between a first secret share of a first value and a first secret share of a second value;
   partitioning (102) the first difference in binary form into N sections, where N is a positive integer;
   for a j$^{th}$ section ($x_j$) of the first difference, where $j = 0, 1, ... , N - 1$:

   generating (106) a first secret share of a first indicator indicating whether $x_{j < y_j}$, where $y_j$ is a j$^{th}$ section of N sections of a second difference between a second secret share of the second value and a second secret share of the first value, wherein the second difference is generated by a second party of the secure MPC;
   sending, based on oblivious transfer (OT) protocol, a second secret share of the first indicator to the second party;
   generating (112) a first secret share of a second indicator indicating whether $x_j = y_j$;
   sending (114), based on the OT protocol, a second secret share of the second indicator to the second party; and
   generating (116), based on the second indicator, a first secret share of a third indicator indicating whether $x_j$ is a most significant section of the N sections where $x_j \neq y_j$; and

   determining (120) whether the first value is smaller than the second value based on the first indicator and the third indicator.

2. The computer-implemented method (100) of claim l, wherein:

   the first secret share of the first indicator and the second secret share of the first indicator are Boolean shares;
   the first secret share of the first indicator and the second secret share of the second indicator are arithmetic shares; and
   the first secret share of the first indicator and a second secret share of the third indicator are arithmetic shares.

3. The computer-implemented method (100) of claim 1, wherein the N sections of the first difference each comprises M bits, where M is an integer, wherein generating the first secret share of the first indicator comprises generating a first random bit as the first secret share of the first indicator;

wherein the method further comprises:

generating, based on the first random bit, a first group of $2^M$ bits; and

wherein sending the second secret share of the first indicator to the second party comprises sending a bit selected from the first group of $2^M$ bits as the second secret share of the first indicator to the second party, wherein the bit is selected on $y_j$.

4. The computer-implemented method (100) of claim 1, wherein the N sections of the first difference each comprises M bits, where M is an integer;

wherein generating the first secret share of the second indicator comprises generating a second random integer between 0 and N as the first secret share of the second indicator;

wherein the method further comprises:

generating, based on the second random integer, a second group of $2^M$ integers; and

wherein sending the second secret share of the second indicator to the second party comprises sending an integer selected from the second group of $2^M$ integers as the second secret share of the second indicator, wherein the integer is selected on $y_j$.

5. The computer-implemented method (100) of claim 4, wherein generating the first secret share of the third indicator comprises:

computing $\left(\sum_{k=0}^{j}\langle eq_k\rangle_0^A - 2 \cdot \langle eq_j\rangle_0^A + 1\right) \, mod \, (N+1)$, where $\langle eq_k\rangle_0^A$ is the first secret share of the second indicator corresponding to a $k^{th}$ section of the N sections.

6. The computer-implemented method (100) of claim 5, further comprising:

generating, by the second party, a second secret share of the third indicator by computing $\left(\sum_{k=0}^{j}\langle eq_k\rangle_1^A - 2 \cdot \langle eq_j\rangle_1^A\right) \, mod \, (N+1)$, where $\langle eq_k\rangle_1^A$ is the second secret share of the second indicator corresponding to the $k^{th}$ section.

7. The computer-implemented method (100) of claim 6, wherein determining whether the first value is smaller than the second value comprises:

performing an exclusive OR (XOR) operation on:

the first secret share of the first indicator corresponding to a $R^{th}$ section of the N sections, wherein the $R^{th}$ section is the most significant section where $x_R \neq y_R$; and

the second secret share of the first indicator corresponding to the $R^{th}$ section.

8. The computer-implemented method (100) of claim 1, wherein the N sections of the first difference each comprise M bits, where M is an integer,

wherein generating the first secret share of the second indicator comprises:

generating a random bit;

generating, based on the random bit, a group of $2^M$ bits, wherein a bit is selected from the group of $2^M$ bits based on a value of $y_j$;

generating a random integer as the first secret share of the second indicator; and

generating, based on the random integer, two integers, wherein an integer is selected, based on the bit selected from the group of $2^M$ bits, from the two integers as the second secret share of the second indicator.

9. The computer-implemented method (100) of claim 1, wherein the secure MPC is a secure two-party computation.

10. One or more computer-readable storage media storing one or more instructions that, when executable by one or more computers, cause the one or more computers to perform the computer-implemented method according to any of claims 1-9.

11. A computer-implemented system comprising:

one or more computers; and

one or more computer memory devices interoperably coupled with the one or more computers and having computer-readable storage media storing one or more instructions that, when executed by the one or more computers, cause the one or more computers to perform the computer-implemented method according to any of claims 1-9.

| | Party 0 (P0) | Party 1 (P1) |
|---|---|---|
| Partition input $x$ and $y$ into a number of sections | $x = 1101110000110110$ <br> $= x_0\|\|x_1\|\|x_2\|\|x_3$ <br> $= 1101\|\|1100\|\|0011\|\|0110$ | $y = 1101110100110110$ <br> $= y_0\|\|y_1\|\|y_2\|\|y_3$ <br> $= 1101\|\|1101\|\|0011\|\|0110$ |
| For each section $x_j$, invoke oblivious transfer (OT) protocol | (1) Generate a first random bit $\langle lt_j \rangle_0^B \leftarrow \{0,1\}$, and generate a first group of 16 bits $s_{j,k} = (\langle lt_j \rangle_0^B \oplus 1\{x_j < k\}) \bmod 2$, $k = 0,1,\dots,15$ <br> (2) Generate a second random integer $\langle eq_j \rangle_0^A \leftarrow \{0,1,\dots,q\}$, and generate a second group of 16 integers $t_{j,k} = (1\{x_j \neq k\} - \langle eq_j \rangle_0^A) \bmod (q+1)$, $k = 0,1,\dots,15$ | (1) Obtain $\langle lt_j \rangle_1^B = s_{j,y_j}$ <br> $= (\langle lt_j \rangle_0^B \oplus 1\{x_j < k\}) \bmod 2$ <br> (2) Obtain $\langle eq_j \rangle_1^A = t_{j,y_j}$ <br> $= (1\{x_j \neq y_j\} - \langle eq_j \rangle_0^A) \bmod (q+1)$ |
| Output secret shares of $lt_j$ and $eq_j$ | (1) Output $\langle lt_0 \rangle_0^B \|\|\langle lt_1 \rangle_0^B\|\|\langle lt_2 \rangle_0^B\|\|\langle lt_3 \rangle_0^B$ (e.g.,0110) <br> (2) Output $\langle eq_0 \rangle_0^A\|\|\langle eq_1 \rangle_0^A\|\|\langle eq_2 \rangle_0^A\|\|\langle eq_3 \rangle_0^A$ (e.g., 3234) | (1) Output $\langle lt_0 \rangle_1^B \|\|\langle lt_1 \rangle_1^B\|\|\langle lt_2 \rangle_1^B\|\|\langle lt_3 \rangle_1^B$ (e.g.,0010) <br> (2) Output $\langle eq_0 \rangle_1^A\|\|\langle eq_1 \rangle_1^A\|\|\langle eq_2 \rangle_1^A\|\|\langle eq_3 \rangle_1^A$ (e.g., 2421) |
| Identify the first section that are not equal | For each $\langle eq_j \rangle_0^A$, compute $\langle s_j \rangle_0^A = (\sum_{k=0}^j \langle eq_k \rangle_0^A - 2 \cdot \langle eq_j \rangle_0^A + 1) \bmod(q+1)$ <br><br> Output $\langle s_0 \rangle_0^A\|\|\langle s_1 \rangle_0^A\|\|\langle s_2 \rangle_0^A\|\|\langle s_3 \rangle_0^A$ (e.g., 3230) | For each $\langle eq_j \rangle_1^A$, compute $\langle s_j \rangle_1^A = (\sum_{k=0}^j \langle eq_k \rangle_1^A - 2 \cdot \langle eq_j \rangle_1^A) \bmod(q+1)$ <br><br> Output $\langle s_0 \rangle_1^A\|\|\langle s_1 \rangle_1^A\|\|\langle s_2 \rangle_1^A\|\|\langle s_3 \rangle_1^A$ (e.g., 3342) |

FIG. 1A

100

110

112

114

116

118

120

|  | **Party 0 (P0)** | **Party 1 (P1)** |
|---|---|---|
| For each section $\langle s_j \rangle_0^A$, invoke OT protocol | Generate a third random bit $\langle g_j \rangle_0^B \leftarrow \{0,1\}$, and generate a third group of 5 bits $t_{j,k} = \langle g_j \rangle_0^B \oplus \left( \mathbf{1}\left\{ \langle s_j \rangle_0^A = k \right\} AND \langle lt_j \rangle_0^B \right)$, $k = 0,1,\ldots,4$ | Obtain $\langle g_j \rangle_1^B$ $= t_{j,z}$ $= \langle g_j \rangle_0^B \oplus \left( \mathbf{1}\left\{ \langle s_j \rangle_0^A = Z \right\} AND \langle lt_j \rangle_0^B \right)$, where $Z = \left[ -\langle s_j \rangle_1^A \right] mod\ (q+1)$ |
| Output secret shares of $g_j$ | Output $\langle g_0 \rangle_0^B \| \langle g_1 \rangle_0^B \| \langle g_2 \rangle_0^B \| \langle g_3 \rangle_0^B$ (e.g., 0110) | Output $\langle g_0 \rangle_1^B \| \langle g_1 \rangle_1^B \| \langle g_2 \rangle_1^B \| \langle g_3 \rangle_1^B$ (e.g., 0010) |
| For each section $\langle s_j \rangle_1^A$, invoke OT protocol | Obtain $\langle h_j \rangle_0^B$ $= t_{j,z}$ $= \langle h_j \rangle_1^B \oplus \left( \mathbf{1}\left\{ \langle s_j \rangle_1^A = Z \right\} AND \langle lt_j \rangle_1^B \right)$, where $Z = \left[ -\langle s_j \rangle_0^A \right] mod\ (q+1)$ | Generate a random bit $\langle h_j \rangle_1^B \leftarrow \{0,1\}$, and generate a fourth group of 5 bits $t_{j,k} = \langle h_j \rangle_1^B \oplus \left( \mathbf{1}\left\{ \langle s_j \rangle_1^A = k \right\} AND \langle lt_j \rangle_1^B \right)$, $k = 0,1,\ldots,4$ |
| Output secret shares of $h_j$ | Output $\langle h_0 \rangle_0^B \| \langle h_1 \rangle_0^A \| \langle h_2 \rangle_0^A \| \langle h_3 \rangle_0^A$ (e.g., 0110) | Output $\langle h_0 \rangle_1^B \| \langle h_1 \rangle_1^B \| \langle h_2 \rangle_1^B \| \langle h_3 \rangle_1^B$ (e.g., 0110) |
| Output secret share of $\mathbf{1}\{a < b\}$ | $\langle \mathbf{1}\{a<b\} \rangle_0^B = \left( \sum_{j=0}^{j=q-1} \langle g_j \rangle_0^B \oplus \langle h_j \rangle_0^B \right) mod\ 2$ | $\langle \mathbf{1}\{a<b\} \rangle_1^B = \left( \sum_{j=0}^{j=q-1} \langle g_j \rangle_1^B \oplus \langle h_j \rangle_1^B \right) mod\ 2$ |
| Obtain result of comparison | $\langle \mathbf{1}\{a<b\} \rangle_0^B \oplus \langle \mathbf{1}\{a<b\} \rangle_1^B$ | |

FIG. 1B

22

**200**

**202** — Generate, by a first party of a secure multi-party computation (MPC), a first difference between a first secret share of a first value and a first secret share of a second value

**204** — Partition the first difference into N sections, where N is an positive integers

$j=0$

$J<N$
Yes

**206** — Generate a first secret share of a first indicator indicating whether $x_j < y_j$, where $y_j$ is a $j^{th}$ section of N sections of a second difference between a second secret share of the second value and a second secret share of the first value, wherein the second difference is generated by a second party of the secure MPC

$j=j+1$

**208** — Send, based on oblivious transfer (OT) protocol, a second secret share of the first indicator to the second party

**210** — Generate a first secret share of a second indicator indicating whether $x_j = y_j$

**212** — Send, based on oblivious transfer (OT) protocol, a second secret share of the second indicator to the second party

**214** — Generate, based on the second indicator, a first secret share of a third indicator indicating whether $x_j$ is a most significant section of the N sections where $x_j \; y_j$

**216** — Determine whether the first value is smaller than the second value based on the first indicator and the third indicator

FIG. 2

FIG. 3

Europäisches
Patentamt
European
Patent Office
Office européen
des brevets

# EUROPEAN SEARCH REPORT

**Application Number**

EP 25 20 8961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DEEVASHWER RATHEE ET AL: "CrypTFlow2: Practical 2-Party Secure Inference", ARXIV.ORG, CORNELL UNIVERSITY LIBRARY, 201 OLIN LIBRARY CORNELL UNIVERSITY ITHACA, NY 14853, 13 October 2020 (2020-10-13), XP081785378, DOI: 10.1145/3372297.3417274 * sections 1.2, 3.1 * ----- | 1-11 | INV. H04L9/08 |
| Y | TIANPEI LU ET AL: "Efficient 2PC for Constant Round Secure Equality Testing and Comparison", IACR, INTERNATIONAL ASSOCIATION FOR CRYPTOLOGIC RESEARCH , vol. 20240613:062237 13 June 2024 (2024-06-13), pages 1-32, XP061087766, Retrieved from the Internet: URL:https://eprint.iacr.org/archive/2024/949/1718259757.pdf [retrieved on 2024-06-14] * section IV * ----- | 1-11 | |
| A | COUTEAU GEOFFROY ED - PRENEEL BART BART PRENEEL@ESAT KULEUVEN BE IMEC-COSIC KU LEUVEN HEVERLEE BELGIUM ET AL: "New Protocols for Secure Equality Test and Comparison", 10 June 2018 (2018-06-10), APPLIED CRYPTOGRAPHY AND NETWORK SECURITY; [LECTURE NOTES IN COMPUTER SCIENCE; LECT.NOTES COMPUTER], SPRINGER INTERNATIONAL PUBLISHING, CHAM, PAGE(S) 303 - 320, XP047660820, ISSN: 0302-9743 ISBN: 978-3-319-93386-3 [retrieved on 2018-06-10] * the whole document * ----- | 1-11 | |

**TECHNICAL FIELDS SEARCHED (IPC)**

H04L

The present search report has been drawn up for all claims

| Place of search | Date of completion of the search | Examiner |
|---|---|---|
| Munich | 26 February 2026 | Yamajako-Anzala, A |

EPO FORM 1503 03.82 (P4C01)